(19) Europäisches Patentamt / European Patent Office / Office européen des brevets

(11) **EP 2 551 326 A1**

(12) **EUROPÄISCHE PATENTANMELDUNG**


(43) Veröffentlichungstag:
**30.01.2013 Patentblatt 2013/05**

(51) Int Cl.:
***C09K 8/035*** *(2006.01)* ***C09K 8/60*** *(2006.01)*
***C08G 69/10*** *(2006.01)*

(21) Anmeldenummer: **11175680.5**

(22) Anmeldetag: **28.07.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**



(71) Anmelder: **BASF SE**
**67056 Ludwigshafen (DE)**

(72) Erfinder:
- **Lafuente Cerda, Oscar**
  **85560 Ebersberg (DE)**
- **Bruchmann, Bernd**
  **67251 Freinsheim (DE)**
- **Maitro-Vogel, Sophie**
  **68199 Mannheim (DE)**
- **Reinoso Garcia, Marta**
  **69221 Dossenheim (DE)**

(74) Vertreter: **Witz, Michael**
**BASF Construction Chemicals GmbH**
**GVX/DT**
**Dr.-Albert-Frank-Strasse 32**
**83308 Trostberg (DE)**


(54) **Verwendung von Polylysin als Shale Inhibitor**


(57) Vorgeschlagen wird die Verwendung von Polylysin bei der Erschließung, Ausbeutung und Komplettierung unterirdischer Erdöl- und Erdgaslagerstätten sowie bei Tiefenbohrungen, insbesondere als Shale Inhibitor in wasserbasierten Bohrspülungen, Komplettierungsflüssigkeiten oder Stimulationsflüssigkeiten.


Fig. 1

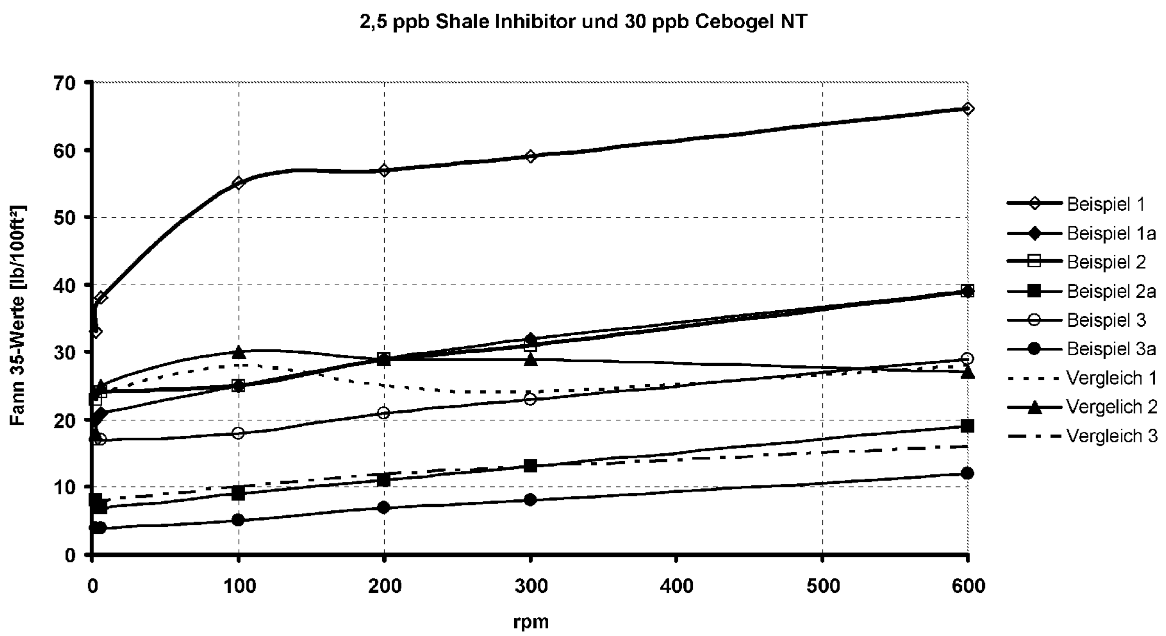


EP 2 551 326 A1

## Beschreibung

Die vorliegende Erfindung betrifft die Verwendung von Polylysin bei der Erschließung, Ausbeutung und Komplettierung unterirdischer Erdöl- und Erdgaslagerstätten sowie bei Tiefenbohrungen.

Schieferton (engl. "shale") ist ein feines, impermeables sedimentäres Gestein, welches aus Ton und anderen Mineralien besteht. Er stellt eines der häufigsten Gesteine dar, welche in Ölfeldern durchbohrt werden müssen um an den Ölschicht zu gelangen. Schieferton hat wegen seines großen Anteils an ionisch geladenem Ton eine große Tendenz mit Wasser zu quellen. Das macht ihn zu einem sehr problematischen Gestein bei Tiefenbohrungen mit wasserbasierten Bohrspülungen. Ein sogenannter "Shale Inhibitor" hat die Funktion, den Schieferton an einer Quellung mit Wasser zu hindern.

EP 0634468 A1 beschreibt Additive für Bohrspülungen sowie Verfahren, die das Quellen von Tonen in unterirdischen Bohrungen verhindern. In einer Ausführungsform wird ein Trihydroxyalkylamin mit einem Alkylhalogenid oder einem wasserlöslichen quaternären Amin zu einem quaternisierten Trihydroxyalkylamin umgesetzt. Die Reaktionsprodukte können auch kondensierte Reaktionsprodukte quaternisierter Trihydroxyalkylamine umfassen. In einer weiteren Ausführungsform wird ein Cholin-Derivat verwendet. Die quaternisierten Reaktionsprodukte und die Cholin-Derivate zeichnen sich durch eine geringe Toxizität und eine gute Kompatibilität mit anionischen Bohrspülungskomponenten aus. Es wird über eine Verbesserung der rheologischen Eigenschaften der Bohrspülungen sowie über eine Verbesserung der Umweltverträglichkeit und der Kompatibilität mit den Bohrspülungen berichtet.

US 6,484,821 B1 beschreibt eine wasserbasierte Bohrspülung zum Durchbohren von wasserquellbaren Schieferton enthaltenden Formationen. Diese enthält vorzugsweise eine wasserbasierte kontinuierliche Phase, ein Beschwerungsmaterial und ein Schiefergesteinhydratations-Inhibierungsmittel (engl. shale hydration inhibition agent) der Formel $H_2N\text{-}R\text{-}\{OR'\}_x\text{-}Y$, wobei R und R' Alkylengruppen mit 1-6 Kohlenstoffatomen sind und x einem Wert von etwa 1 bis etwa 25 entspricht. Die Gruppe Y sollte eine Amin- oder Alkoxygruppe sein, vorzugsweise ein primäres Amin oder eine Methoxygruppe. Das Schiefergesteinhydratations-Inhibierungsmittel sollte in einer für die Verringerung der Quellung des Schiefertons ausreichenden Konzentration vorliegen. In der zur US 6,484,821 B1 parallelen EP 1257610 B1 wird noch präziser eine Verbindung der Formel $H_2N\text{-}CH(CH_3)CH_2\text{-}\{OCH_2CH(CH_3)\}_x\text{-}NH_2$ als Shale Inhibitor spezifiziert, wobei x einen Wert von weniger als 15 aufweist.

WO 2008/031806 A1 beschreibt neutrale oder salzförmige Kondensationsprodukte aus $C_{4\text{-}10}$-Dicarbonsäuren mit Alkanolaminen, Diaminen oder Polyalkylenaminen als Shale Inhibitoren.

US 5,149,690 beschreibt Bohrspülungsadditive, die das Quellen von Schieferton unterdrücken, in Form von Polyamiden und Polyaminosäuren als Reaktionsprodukte einer aliphatischen Säure mit einem aliphatischen Polyamin. Die dort erwähnten "Polyaminosäuren" sind strukturell nicht mit Polylysin vergleichbar, insbesondere, weil sie freie Säurefunktionen aufweisen, während Polylysin freie Aminfunktionen aufweist.

Chemikalien für Offshoreanwendungen müssen strengen Umweltauflagen genügen. Sie dürfen nicht toxisch sein, müssen biologisch abbaubar sein und dürfen nicht bioakkumulierbar sein. Vergleiche http://www.cefas.defra.gov.uk, insbesondere http://www.cefas.defra.gov.uk/industry-information/offshore-chemical-notification-scheme. aspx, http://www.cefas.defra.gov.uk/industry-information/offshore-chemicalnotification-scheme/ocns-ecotoxicology-testing.aspx und http://www.cefas.defra.gov.uk/industry-information/offshore-chemical-notificationscheme/hazard-assessment.aspx (abgefragt am 01.06.2011).

Die der vorliegenden Erfindung zu Grunde liegende Aufgabe war es, einen nicht toxischen, biologisch abbaubaren, nicht bioakkumulierbaren vorteilhaften Shale Inhibitor bereitzustellen.

Diese Aufgabe wird mit den Merkmalen des unabhängigen Anspruchs gelöst. Die abhängigen Ansprüche beziehen sich auf bevorzugte Ausführungsformen.

Es wurde überraschend gefunden, dass Polylysin, insbesondere quaternisiertes Polylysin, ein sehr guter Shale Inhibitor ist und außerdem biologisch abbaubar ist.

Gegenstand der vorliegenden Anmeldung ist die Verwendung von Polylysin bei der Erschließung, Ausbeutung und Komplettierung unterirdischer Erdöl- und Erdgaslagerstätten sowie bei Tiefenbohrungen, insbesondere als Shale Inhibitor in wasserbasierten Bohrspülungen, Komplettierungsflüssigkeiten oder Stimulationsflüssigkeiten zur Stimulierung unterirdischer Erdöl- und Erdgaslagerstätten.

Im Sinne der vorliegenden Erfindung soll der generische Begriff "Polylysin" sowohl geradkettige Polylysine als auch verzweigte, hyperverzweigte und dendrimere Polylysine umfassen. Gleichermaßen sollen auch quaternisierte Polylysine umfasst sein.

Polylysin ist ein Polykondensationsprodukt der Aminosäure Lysin. Dabei kann es sich um unverzweigtes Polylysin ($\varepsilon$-Poly-L-lysin bzw. $\varepsilon$-Polylysin) der folgenden allgemeinen

Formel (I) handeln, da die endständige $\varepsilon$-Aminofunktion der Polykondensationsreaktion leichter zugänglich ist als die $\alpha$-Aminogruppe.

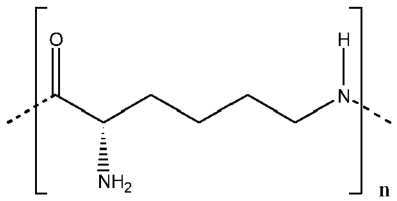

(I)

Allerdings zeigt auch die $\alpha$-Aminogruppe eine gewisse Reaktivität, so dass verzweigte, hyperverzweigte und sogar dendrimere Polylysine erhältlich sind. In unserer WO 2007/ 060119 A1 beschreiben wir Synthesen, die zu hyperverzweigten Polylysinen führen.

Zur Definition von dendrimeren und hyperverzweigten Polymeren siehe auch P.J. Flory, J. Am. Chem. Soc. 1952, 74, 2718 und H. Frey et al., Chemistry - A European Journal, 2000, 6, No. 14, 2499.

Unter "hyperverzweigt" wird im Zusammenhang mit der vorliegenden Erfindung verstanden, dass der Verzweigungsgrad (Degree of Branching, DB) 10 bis 99,9 %, bevorzugt 20 bis 99 %, besonders bevorzugt 20 bis 95 % beträgt. Unter "dendrimer" wird im Zusammenhang mit der vorliegenden Erfindung verstanden, dass der Verzweigungsgrad 99,9 - 100 % beträgt. Diese Definitionen entsprechen den Definitionen gemäß WO 2007/060119 A1.

Der Verzweigungsgrad ist definiert als

$$DB\,[\%] = 100 * (T + Z) / (T + Z + L),$$

wobei T die mittlere Anzahl der terminalen Monomereinheiten, Z die mittlere Anzahl der verzweigten Monomereinheiten und L die mittlere Anzahl der linearen Monomereinheiten, bedeutet. Zur Definition des "Degree of Branching" siehe auch H. Frey et al., Acta Polym. 1997, 48, 30.

Gegenstand der vorliegenden Erfindung ist die Verwendung von Polylysin bei der Erschließung, Ausbeutung und Komplettierung unterirdischer Erdöl- und Erdgaslagerstätten sowie bei Tiefenbohrungen, insbesondere als Shale Inhibitor in wasserbasierten Bohrspülungen, Komplettierungsflüssigkeiten oder Stimulationsflüssigkeiten.

Dabei kann es sich, wie bereits oben erwähnt, um lineare Polylysine, verzweigte Polylysine, hyperverzweigte Polylysine oder dendrimere Polylysine handeln. Das Molekulargewicht ($M_w$) liegt dabei zweckmäßig im Bereich von 500 bis 50000 g/mol, vorzugsweise im Bereich von 500 bis 10000 g/mol, besonders bevorzugt im Bereich von 750 bis 7500 g/mol, insbesondere im Bereich von 750 bis 5000 g/mol und speziell im Bereich von 750 bis 1500 g/mol. Vorzugsweise ist das Polylysin ein hyperverzweigtes Polylysin.

Die Stickstoffatome des Polylysins sind vorzugsweise mit $C_{1-4}$-Alkylgruppen quaternisiert. Als Quaternisierungsmittel kann beispielsweise ein $C_{1-4}$-Halogenalkan, insbesondere ein Brom- oder Iodalkan, oder Dimethylsulfat eingesetzt werden. Man bevorzugt einen nahezu vollständigen Quaternisierungsgrad. Dieser kann beispielsweise anhand der Aminzahl des quaternisierten Polylysins, d.h. derjenigen Menge an KOH in mg, die dem verbleibenden Aminanteil von 1 g Polylysin äquivalent ist, bestimmt werden. Besonders bevorzugt sind im quaternisierten Polylysin keine freien Aminfunktionen mehr vorhanden.

Das Polylysin wird zweckmäßig in einer Konzentration von 1 - 30 g/l, vorzugsweise 3 - 25 g/l und insbesondere 5 - 10 g/l, Wasser eingesetzt. Vorzugsweise wird es zusammen mit Wasserretentionsmitteln, Rheologiemodifizierern, Dispersionsmitteln, Verdünnern, Schmiermitteln und/oder anderen in Bohrspülungen, Komplettierungsflüssigkeiten oder Stimulationsflüssigkeiten gebräuchlichen Mitteln eingesetzt.

Die biologische Abbaubarkeit des erfindungsgemäß verwendeten Polylysins beträgt, gemessen nach dem in "OECD Guidelines for Testing of Chemicals - 1992 OECD 306: Biodegradability in Seawater, Closed Bottle Method" beschriebenen Verfahren, nach 28 Tagen bevorzugt mindestens 15 % und nach 60 Tagen bevorzugt mindestens 55 %.

Die vorliegende Erfindung wird nun anhand der nachfolgenden Beispiele unter Bezugnahme auf die beigefügten Zeichnung näher erläutert. Es zeigt:

Fig. 1 eine graphische Darstellung der Fann 35-Werte gemäß Tabelle 2.

BEISPIELE

Herstellung der Polylysine

Beispiel 1:

In einen 4l-Vierhalskolben, ausgestattet mit Rührer, Innenthermometer, Gaseinleitungsrohr und absteigendem Kühler mit Vakuumanschluß und Auffanggefäß wurden 1000 g L-Lysin-hydrochlorid, 219,1 g festes Natriumhydroxid, 100 g Wasser und 0,02 g Dibutylzinndilaurat gegeben und die Mischung unter Rühren langsam auf eine Innentemperatur von 130 °C aufgeheizt, wobei der Ansatz leicht aufschäumte. Nach 5 Stunden Reaktionsdauer wurde Wasser unter vermindertem Druck (200 mbar) abdestilliert, wobei nach Übergang der größten Menge an Wasser die Temperatur langsam auf 160 °C erhöht und der Druck auf 10 mbar reduziert wurde. Nach 8 Stunden waren 260 g Wasser als Destillat aufgefangen. Das hochviskose Polymer wurde heiß ausgetragen und in eine Aluminiumschale gegossen.

Zur Bestimmung der Molekulargewichtsverteilung wurde das Produkt in Wasser gelöst, die Lösung filtriert, und per GPC vermessen. Die GPC wurde durchgeführt mittels einer Säulenkombination aus OHpak SB-803 HQ und SB-804 HQ (Fa. Shodex) unter Zugabe von 0,1 mol/l Natriumhydrogencarbonat bei 30 °C mit einer Flussrate von 0,5 ml/min und Polyethylenoxid als Standard. Zur Detektion wurde ein UV-Detektor eingesetzt, der bei einer Wellenlänge von 230 nm arbeitete. Das mittlere Molekulargewicht wurde bestimmt als $M_n$ = 1400 g/mol und $M_w$ = 4300 g/mol.

Der Verzweigungsgrad (Degree of Branching, (DB)) betrug 0,35 (d.h. 35 %). Er wurde bestimmt nach der in M. Scholl, T.Q. Nguyen, B. Bruchmann, H.-A Klok, J. Polym. Sci.: Part A: Polym. Chem. 45, 2007, 5494-5508, beschriebenen Methode.

Die Aminzahl (AZ) wurde in Anlehnung an DIN 53176 bestimmt. Hierbei wurde jedoch im Gegensatz zu der angegebenen DIN-Vorschrift mit einer Eisessig/Trifluormethansulfonsäuremischung titriert und der Äquivalenzpunkt potentiometrisch bestimmt. Die Aminzahl betrug 278 mg KOH/g

Beispiel 2:

In einen 4l-Vierhalskolben, ausgestattet mit Rührer, Innenthermometer, Gaseinleitungsrohr und absteigendem Kühler mit Vakuumanschluß und Auffanggefäß wurden 1000 g L-Lysin-hydrochlorid, 219,1 g festes Natriumhydroxid, 150 g Wasser und 0,1 g Dibutylzinndilaurat gegeben und die Mischung unter Rühren langsam auf eine Innentemperatur von 150 °C aufgeheizt, wobei der Ansatz leicht aufschäumte und Wasser bei Normaldruck abdestillierte. Nach 4 Stunden Reaktionsdauer wurde unter vermindertem Druck (400 mbar) weiter abdestilliert, wobei die Temperatur langsam auf 160 °C erhöht wurde. Nach 8 Stunden waren 340 g Wasser als Destillat aufgefangen. Das hochviskose Polymer wurde heiß ausgetragen und in eine Aluminiumschale gegossen.

Das mittlere Molekulargewicht, die Aminzahl und der Degree of Branching wurden nach den Angaben in Beispiel 1 bestimmt. $M_n$ = 1200 g/mol und $M_w$ = 2800 g/mol, die AZ betrug 310 mg KOH/g und der DB-Wert betrug 0,41 (d.h. 41 %).

Beispiel 3:

In einen 4l-Vierhalskolben, ausgestattet mit Rührer, Innenthermometer, Gaseinleitungsrohr und absteigendem Kühler mit Vakuumanschluß und Auffanggefäß wurden 1000 g L-Lysin-hydrochlorid, 219,1 g festes Natriumhydroxid, 150 g Wasser und 0,02 g Dibutylzinndilaurat gegeben und die Mischung unter Rühren langsam auf eine Innentemperatur von 130 °C aufgeheizt, wobei die Temperatur im Verlauf von 5 Stunden langsam bis auf 150 °C erhöht wurde. Während dieser Reaktionszeit wurden dabei 218 g Wasser unter Normaldruck abdestilliert. Nun wurde der Druck auf 200 mbar verringert und die Innentemperatur auf 160 °C erhöht, wobei nochmals 88 g Wasser als Destillat übergingen. Das hochviskose Polymer wurde heiß ausgetragen und in eine Aluminiumschale gegossen.

Das mittlere Molekulargewicht, die Aminzahl und der Degree of Branching wurde nach den Angaben in Beispiel 1 bestimmt. $M_n$ = 660 g/mol und $M_w$ = 950 g/mol, die AZ betrug 379 mg KOH/g und der DB-Wert betrug 0,57 (d.h. 57 %).

Quaternisierung der Polylysine

Beispiel 1a:

In einem 500 ml Kolben mit Rührer wird das Polylysin aus Beispiel 1 (100,9 g) vorgelegt und mit Wasser (100,9 g) verdünnt. Dimethylsulfat (1 mol, 126,1 g) wird langsam zudosiert. Die Reaktionsmischung wird zwei Tage bei Raumtemperatur gerührt. Über die Aminzahl wird der Umsetzungsgrad (Quaternisierungsgrad) verfolgt. Nach zwei Tagen liegt die Aminzahl bei 0,08 mmol/g und der Quaternisierungsgrad bei 95%. Das überschüssige Dimethylsulfat wird 6 Stunden bei 80 °C hydrolysiert. Man erhält eine braune Lösung (280,9 g, Festgehalt 67 %).

Beispiel 2a:

In einem 500 ml Kolben mit Rührer wird das Polylysin aus Beispiel 2 (90,5 g) vorgelegt und mit Wasser (90,5 g) verdünnt. Dimethylsulfat (1 mol, 126,1 g) wird langsam zudosiert. Die Reaktionsmischung wird zwei Tage bei Raumtemperatur gerührt. Über die Aminzahl wird der Umsetzungsgrad (Quaternisierungsgrad) verfolgt. Nach zwei Tagen liegt die Aminzahl bei 0,00 mmol/g und der Quaternisierungsgrad bei 100%. Das überschüssige Dimethylsulfat wird 6 Stunden bei 80 °C hydrolysiert. Man erhält eine braune Lösung (242,5 g, Festgehalt 70 %).

Beispiel 3a:

In einem 500 ml Kolben mit Rührer wird das Polylysin aus Beispiel 3 (70,4 g) vorgelegt und mit Wasser (74,0 g) verdünnt. Dimethylsulfat (1 mol, 126,1 g) wird langsam zudosiert. Die Reaktionsmischung wird zwei Tage bei Raumtemperatur gerührt. Über die Aminzahl wird der Umsetzungsgrad (Quaternisierungsgrad) verfolgt. Nach zwei Tagen liegt die Aminzahl bei 0,00 mmol/g und der Quaternisierungsgrad bei 100%. Das überschüssige Dimethylsulfat wird 6 Stunden bei 80 °C hydrolysiert. Man erhält eine braune Lösung (287,7 g, Festgehalt 64 %).

Anwendungstests

350 ml Leitungswasser werden in ein Becherglas gegeben, 2,5 g des Shale Inhibitors (als Trockenmasse gerechnet - d.h. quaternisiertes bzw. nicht quaternisiertes Polylysin bzw. ein Produkt nach dem Stand der Technik) werden zugegeben und 20 min gerührt. Die Lösung wird in einen HB-Mischbecher umgefüllt. Es werden 30 g Cebogel® NT (Bentonit, Cebo Holland B.V., Niederlande) als Modellsubstanz für Schieferton zugegeben und 10 min bei niedriger Geschwindigkeit gerührt. Anschließend werden die "Fann-Rheologie" und die Gelstärke bestimmt.

Die verwendeten Shale Inhibitoren sind in der nachfolgenden Tabelle 1 aufgeführt.

Tabelle 1

| **Probe** | **Mn** | **Mw** | **AZ** | **Festgehalt [%]** | **Probe** | **Festgehalt [%]** |
|---|---|---|---|---|---|---|
| Beispiel 1 | 1400 | 4300 | 278 | 100 | Beispiel 1a | 67 |
| Beispiel 2 | 1150 | 2840 | 310 | 100 | Beispiel 2a | 70 |
| Beispiel 3 | 660 | 948 | 379 | 100 | Beispiel 3a | 64 |
| Vergleich 1 | Basodrill® 3200 (Shale Inhibitor der BASF SE) | | | | | |
| Vergleich 2 | Ultrahib® (Shale Inhibitor der M-I SWACO) | | | | | |
| Vergleich 3 | Cholinchlorid (BASF SE) | | | | | |

Die Ergebnisse sind in der nachfolgenden Tabelle 2 und in graphischer Form in Fig. 1 wiedergegeben, wobei ppb "pound per barrel" bedeutet.

Tabelle 2

| 2,5 ppb Shale Inhibitor und 30 ppb Cebogel NT | | | | | | | | | | | |
|---|---|---|---|---|---|---|---|---|---|---|---|
| Probe | Fann 35-Werte [lb/100ft²] | | | | | | Gelstärke | | | | |
| | 600 | 300 | 200 | 100 | 6 | 3 | 10" | 10' | PV | YP | pH |
| Beispiel 1 | 66 | 59 | 57 | 55 | 38 | 33 | 24 | 23 | 7 | 52 | 9,0 |
| Beispiel 1a | 39 | 32 | 29 | 25 | 21 | 20 | 18 | 37 | 7 | 25 | 9,0 |
| Beispiel 2 | 39 | 31 | 29 | 25 | 24 | 23 | 20 | 35 | 8 | 23 | 9,0 |
| Beispiel 2a | 19 | 13 | 11 | 9 | 7 | 8 | 8 | 16 | 6 | 7 | 9,1 |
| Beispiel 3 | 29 | 23 | 21 | 18 | 17 | 17 | 18 | 32 | 6 | 17 | 9,0 |
| Beispiel 3a | 12 | 8 | 7 | 5 | 4 | 4 | 5 | 9 | 4 | 4 | 9,1 |
| Vergleich 1 | 28 | 24 | 25 | 28 | 24 | 22 | 18 | 19 | 4 | 20 | 9,1 |
| Vergleich 2 | 27 | 29 | 29 | 30 | 25 | 18 | 13 | 10 | -2 | 31 | 9,1 |
| Vergleich 3 | 16 | 13 | 12 | 10 | 8 | 8 | 6 | 7 | 3 | 10 | 9,1 |

Rheologie bei verschiedenen pH-Werten

Die Anwendungstests der Proben nach Beispiel 2a und Vergleich 2 werden bei verschiedenen pH-Werten wiederholt. Die Ergebnisse sind in Tabelle 3 wiedergegeben. Es zeigt sich, dass die pH-Wert-Beeinflussbarkeit der erfindungsgemäßen Probe nach Beispiel 2a wesentlich geringer ist als die der Vergleichssubstanz 2 (Ultrahib®).

Tabelle 3

| **Probe** | | **Fann 35-Werte [lb/100ft$^2$]** | | | | | | **Gelstärke** | | | |
|---|---|---|---|---|---|---|---|---|---|---|---|
| | **pH** | **600** | **300** | **200** | **100** | **6** | **3** | **10"** | **10'** | **PV** | **YP** |
| Beispiel 2a | 9,1 | 19 | 13 | 11 | 9 | 7 | 8 | 8 | 16 | 6 | 7 |
| | 7 | 21 | 15 | 13 | 11 | 10 | 11 | 10 | 17 | 6 | 9 |
| | 5 | 25 | 19 | 17 | 14 | 13 | 15 | 15 | 25 | 6 | 13 |
| | 3 | 26 | 20 | 18 | 15 | 15 | 15 | 14 | 17 | 6 | 14 |
| | 0 | 24 | 17 | 15 | 13 | 14 | 15 | 12 | 27 | 7 | 10 |
| Vergleich 2 | 9,1 | 27 | 29 | 29 | 30 | 25 | 18 | 13 | 10 | -2 | 31 |
| | 7,1 | 40 | 35 | 37 | 40 | 26 | 25 | 17 | 17 | 5 | 30 |
| | 5 | 27 | 21 | 20 | 19 | 21 | 18 | 12 | 15 | 6 | 15 |
| | 3 | 25 | 22 | 25 | 28 | 22 | 20 | 11 | 13 | 3 | 19 |
| | 0,2 | 46 | 45 | 45 | 47 | 23 | 21 | 18 | 15 | 1 | 44 |

Biologische Abbaubarkeit

Gemäß dem in "OECD Guidelines for Testing of Chemicals - 1992 OECD 306: Biodegradability in Seawater, Closed Bottle Method" beschriebenen Verfahren betrug die biologische Abbaubarkeit des quaternisieten Polylysins nach Beispiel 1 a nach 28 Tagen 16 % und nach 60 Tagen 58 %.

**Patentansprüche**

1. Verwendung von Polylysin bei der Erschließung, Ausbeutung und Komplettierung unterirdischer Erdöl- und Erdgaslagerstätten sowie bei Tiefenbohrungen, insbesondere als Shale Inhibitor in wasserbasierten Bohrspülungen, Komplettierungsflüssigkeiten oder Stimulationsflüssigkeiten.

2. Verwendung nach Anspruch 1, **dadurch gekennzeichnet, dass** das Molekulargewicht ($M_w$) des Polylysins im Bereich von 500 bis 50000 g/mol, vorzugsweise im Bereich von 500 bis 10000 g/mol, besonders bevorzugt im Bereich von 750 bis 7500 g/mol, insbesondere im Bereich von 750 bis 5000 g/mol und speziell im Bereich von 750 bis 1500 g/mol liegt.

3. Verwendung nach Anspruch 1 oder 2, **dadurch gekennzeichnet, dass** das Polylysin ein hyperverzweigtes Polylysin ist.

4. Verwendung nach einem der Ansprüche 1 bis 3, **dadurch gekennzeichnet, dass** die Stickstoffatome des Polylysins mit $C_{1-4}$-Alkylgruppen quaternisiert sind.

5. Verwendung nach einem der Ansprüche 1 bis 4, **dadurch gekennzeichnet, dass** das Polylysin in einer Konzentration von 1 - 30 g/l, vorzugsweise 3 - 25 g/l und insbesondere 5 - 10 g/l, Wasser eingesetzt wird.

6. Verwendung nach einem der Ansprüche 1 bis 5, **dadurch gekennzeichnet, dass** die biologische Abbaubarkeit des Polylysins, gemessen nach dem in "OECD Guidelines for Testing of Chemicals - 1992 OECD 306: Biodegradability in Seawater, Closed Bottle Method" beschriebenen Verfahren, nach 28 Tagen mindestens 15 % und nach 60 Tagen mindestens 55 % beträgt.

7. Verwendung nach einem der Ansprüche 1 bis 6, **dadurch gekennzeichnet, dass** das Polylysin zusammen mit Wasserretentionsmitteln, Rheologiemodifizierern, Dispersionsmitteln, Verdünnern, Schmiermitteln und/oder anderen in Bohrspülungen, Komplettierungsflüssigkeiten oder Stimulationsflüssigkeiten gebräuchlichen Mitteln eingesetzt wird.

Fig. 1

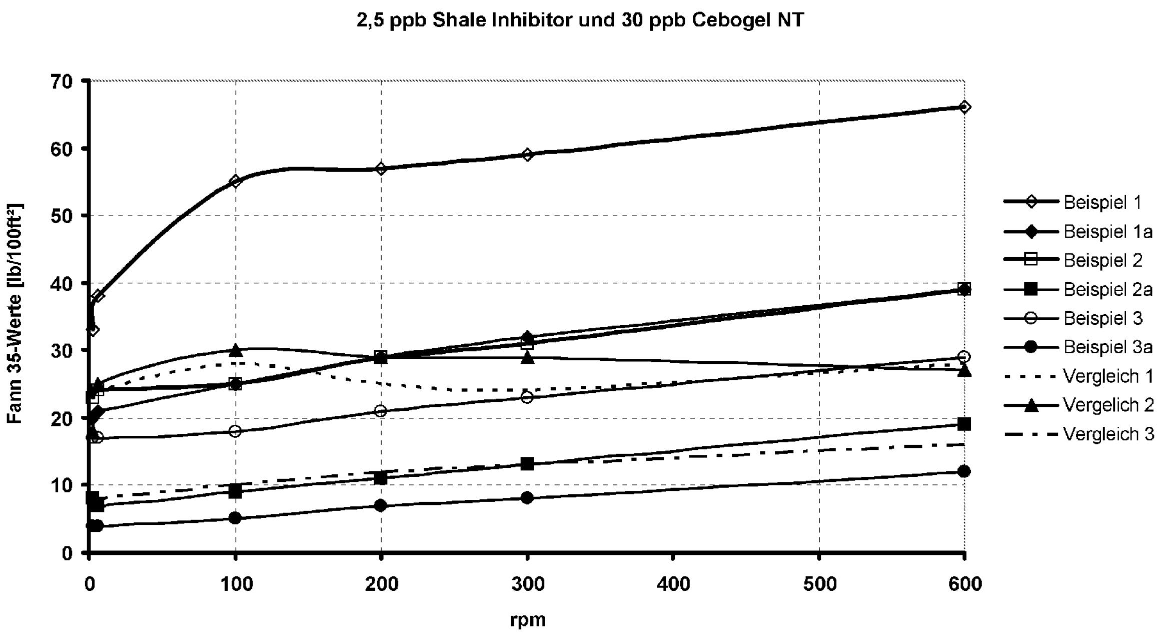
2,5 ppb Shale Inhibitor und 30 ppb Cebogel NT
Fann 35-Werte [lb/100ft²]
70
60
50
40
30
20
10
0
0
100
200
300
400
500
600
rpm
Beispiel 1
Beispiel 1a
Beispiel 2
Beispiel 2a
Beispiel 3
Beispiel 3a
Vergleich 1
Vergelich 2
Vergleich 3

Europäisches Patentamt
European Patent Office
Office européen des brevets

# EUROPÄISCHER RECHERCHENBERICHT

Nummer der Anmeldung
EP 11 17 5680

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2004/220058 A1 (EOFF LARRY S [US] ET AL) 4. November 2004 (2004-11-04)<br>* Absätze [0033], [0034]; Ansprüche 36,48,40 *<br>----- | 1-7 | INV.<br>C09K8/035<br>C09K8/60<br>C08G69/10 |
| X | US 2008/058229 A1 (BERKLAND CORY [US] ET AL) 6. März 2008 (2008-03-06)<br>* Absatz [0082]; Anspruch 29; Beispiel 1 *<br>----- | 1,2,6,7 | |
| A | WO 2004/011771 A1 (CHAMPION SERVO [GB]; STATOIL ASA [NO]; MONTGOMERIE HARRY TRENOUTH RUS) 5. Februar 2004 (2004-02-05)<br>* Seite 1, Zeile 31 - Seite 2, Zeile 20; Ansprüche 1,3,4,6 *<br>* Seite 3, Zeile 11 - Zeile 14 *<br>----- | 1-7 | |
| A | US 5 908 814 A (PATEL ARVIND D [US] ET AL) 1. Juni 1999 (1999-06-01)<br>* Spalte 2, Zeile 37 - Spalte 5, Zeile 10; Ansprüche 1,22,23 *<br>----- | 1-7 | RECHERCHIERTE SACHGEBIETE (IPC) |
| A | RÉGIS D. GOUGEON ET AL: "Direct Observation of Polylysine Side-Chain Interaction with Smectites Interlayer Surfaces through 1 H- 27 Al Heteronuclear Correlation NMR Spectroscopy",<br>LANGMUIR,<br>Bd. 18, Nr. 8, 1. April 2002 (2002-04-01), Seiten 3396-3398, XP55016005,<br>ISSN: 0743-7463, DOI: 10.1021/la0115381<br>* das ganze Dokument *<br>----- | 1-7 | C09K<br>E21B<br>C08G |

Der vorliegende Recherchenbericht wurde für alle Patentansprüche erstellt

1

| Recherchenort | Abschlußdatum der Recherche | Prüfer |
|---|---|---|
| München | 10. Januar 2012 | Redecker, Michael |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 11 17 5680

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-01-2012

| Im Recherchenbericht angeführtes Patentdokument | Datum der Veröffentlichung | Mitglied(er) der Patentfamilie | Datum der Veröffentlichung |
|---|---|---|---|
| US 2004220058 A1 | 04-11-2004 | KEINE | |
| US 2008058229 A1 | 06-03-2008 | AU 2007292452 A1 | 13-03-2008 |
| | | CA 2662493 A1 | 13-03-2008 |
| | | CN 101535594 A | 16-09-2009 |
| | | EA 200900329 A1 | 28-08-2009 |
| | | EP 2059651 A1 | 20-05-2009 |
| | | US 2008058229 A1 | 06-03-2008 |
| | | US 2010056399 A1 | 04-03-2010 |
| | | WO 2008030758 A1 | 13-03-2008 |
| WO 2004011771 A1 | 05-02-2004 | AU 2003246977 A1 | 16-02-2004 |
| | | WO 2004011771 A1 | 05-02-2004 |
| US 5908814 A | 01-06-1999 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0634468 A1
- US 6484821 B1
- EP 1257610 B1
- WO 2008031806 A1
- US 5149690 A
- WO 2007060119 A1


### In der Beschreibung aufgeführte Nicht-Patentliteratur


- **P.J. FLORY.** *J. Am. Chem. Soc.,* 1952, vol. 74, 2718
- **H. FREY et al.** *Chemistry - A European Journal,* 2000, vol. 6 (14), 2499
- **H. FREY et al.** *Acta Polym.,* 1997, vol. 48, 30
- **M. SCHOLL ; T.Q. NGUYEN ; B. BRUCHMANN ; H.-A KLOK.** *J. Polym. Sci.: Part A: Polym. Chem.,* 2007, vol. 45, 5494-5508